# EUROPEAN PATENT APPLICATION

(11) **EP 4 793 396 A1**
(43) Date of publication of application: **19.08.2026**
(21) Application number: 24877282.4
(22) Date of filing: 11.10.2024
(51) Int. Cl.: C23C 2/06, C22C 18/00, C22C 18/04, C22C 19/03, C22C 19/05, C22F 1/00, C22F 1/16, C23C 2/02, C23C 28/02

(54) **HOT DIPPED STEEL MATERIAL**

(30) Priority: 13.10.2023 JP 2023177270
(71) Applicant: Nippon Steel Corporation, Tokyo 100-8071 (JP)
(72) Inventor: KAWAMOTO Kosuke, Tokyo 100-8071 (JP); TOKUDA Kohei, Tokyo 100-8071 (JP)
(74) Representative: Vossius & Partner Patentanwälte Rechtsanwälte mbB
(86) International application number: PCT/JP2024/036460
(87) International publication number: WO 2025/079688

(57) **Abstract**

This coated layer includes a Ni-containing metal layer and a Zn-Al-Mg-based alloy layer, and in an element distribution profile when quantitative analysis is performed by GDS from a surface of the coated layer toward a steel material, when the depth of a point at which an Fe concentration reaches 1% is defined as D_{dif1%} and the depth of a point at which an Fe concentration reaches 95% is defined as D_{dif9.5%}, a maximum value C_{Nimax} of an Ni concentration and a maximum value C_{αmax} of the concentration of a metal component α in D_{dif1%} to D_{dif95%} satisfy the formulas (1) to (3), and when the depth of a point at which an Ni concentration reaches C_{Nimax} is defined as D_{Nimax} and the depth of a point at which the concentration of the metal component α reaches C_{αmax} is defined as D_{αmax}, the following formula (4) is satisfied: C_{αmax} < C_{Nimax} ··· Formula (1), 0.05 ≤ C_{αmax}/(C_{Nimax} + C_{αmax}) < 0.50... Formula (2), 0.2%< C_{αmax} ··· Formula (3), |D_{αmax} - D_{Nimax}| ≤ 0.1 µm ··· Formula (4).

## Description

### TECHNICAL FIELD

The present disclosure relates to a hot-dip coated steel material.

Priority is claimed on Japanese Patent Application No. 2023-177270, filed October 13, 2023, the content of which is incorporated herein by reference.

### BACKGROUND ART

In a case where a steel material is used for a long period of time, it is preferable to apply some kind of antirust treatment to resist corrosion of the steel material. A hot-dip Zn plating method is used in various fields where antirust for steel materials is required, such as the fields of civil engineering, construction, and automobiles, as a means for inexpensive antirust of steel materials.

For example, Patent Document 1 and Patent Document 2 disclose Zn-Al-Mg-based coated steel sheets that have recently attracted attention as highly corrosion-resistant coated steel sheets.

The pursuit of high corrosion resistance of a coated layer has been actively studied because it is possible to achieve a long service life of a steel material and to realize reduction in LCC (Life-Cycle Cost) due to maintenance free. Many of the highly corrosion-resistant coated steel sheets including Zn-Al-Mg-based coated steel sheets are hot-dip coated steel sheets manufactured in a continuous hot-dip galvanizing facility.

A problem of these hot-dip coated steel sheets for achieving high corrosion resistance is corrosion prevention of an exposed portion (base steel exposed portion) of a base steel exposed due to external factors such as cutting, bending, and drawing. **In** the base steel exposed portion, corrosion of the base steel having poor corrosion resistance is prevented by sacrificial corrosion protection action by the surrounding coated layer. However, the sacrificial corrosion protection action by the coated layer promotes corrosion of the coated layer itself.

Here, in order to enhance the corrosion resistance of the steel, Cr passivating in the air environment is generally effective. That is, by using, as the base steel of the coated steel material, high alloy steels or corrosion resistant steels whose performance is made close to the performance of stainless steel by addition of Cr, Ni, or the like, the corrosion resistance of the base exposed portion is improved. This makes it possible to achieve suppression of red rust generation and sacrificial corrosion resistance due to Fe elution. Therefore, in order to further achieve high corrosion resistance of the coated steel material, it is considered preferable to use stainless steel as the base steel. However, it is difficult to form a coated layer on stainless steel, and it is not a practical technique from the viewpoint of price.

### Citation List

### Patent Documents

Patent Document 1: PCT International Publication No. WO 2019/230894
Patent Document 2: PCT International Publication No. WO 2018/139619
Patent Document 3: Japanese Unexamined Patent Application, First Publication No. 2021-042452

### SUMMARY OF INVENTION

### Technical Problem

The present disclosure has been made in view of the above circumstances, and an object of the present disclosure is to provide a hot-dip coated steel material that has improved corrosion resistance in a portion exposed on a surface of a steel material (hereinafter, also referred to as an exposed portion), and enhanced long-term corrosion resistance.

### Solution to Problem

In order to achieve the above object, the present disclosure adopts the constitutions described below.
[1] A coated steel material according to one aspect of the present disclosure is a hot-dip coated steel material including: a steel material; and a coated layer disposed on a surface of the steel material,
   the coated layer including: a Ni-containing metal layer provided on the steel material; and a Zn-Al-Mg-based alloy layer provided on the Ni-containing metal layer, and
   the coated layer having a chemical composition including, in terms of mass%,
   Al: more than 10.0% and less than 40.0%,
   Mg: 3.0% or more and 15.0% or less,
   Ni: 0.03% or more and 5.0% or less,
   Si: 0% or more and 2.0% or less,
   Sn: 0% or more and 0.7% or less,
   Bi: 0% or more and 0.3% or less,
   In: 0% or more and 0.3% or less,
   Ca: 0% or more and 0.6% or less,
   Y: 0% or more and 0.3% or less,
   La: 0% or more and 0.3% or less,
   Ce: 0% or more and 0.3% or less,
   Sr: 0% or more and 0.3% or less,
   Li: 0% or more and 0.3% or less,
   Fe: 0% or more and 5.0% or less,
   Cr: 0% or more and 3.00% or less,
   Mo: 0% or more and 3.00% or less,
   W: 0% or more and 3.00% or less,
   Mn: 0% or more and 3.00% or less,
   Co: 0% or more and 3.00% or less,
   Zr: 0% or more and 0.25% or less,
   Cu: 0% or more and 0.25% or less,
   Ag: 0% or more and 0.25% or less,
   Ti: 0% or more and 0.25% or less,
   Nb: 0% or more and 0.25% or less,
   Sb: 0% or more and 0.25% or less,
   Pb: 0% or more and 0.25% or less,
   B: 0% or more and 1.5% or less,
   P: 0% or more and 1.5% or less,
   V: 0% or more and 0.25% or less, and
   a remainder of Zn and impurities,
   wherein
   in the chemical composition, the total amount of one or more elements selected from an element group consisting of Cr, Mo, W, Mn and Co is 0.03% or more,
   in an element distribution profile when quantitative analysis is performed by glow discharge optical emission spectrometry from a surface of the coated layer toward the steel material, when the depth of a point at which an Fe concentration reaches 1% is defined as D_{dif1%} and the depth of a point at which an Fe concentration reaches 95% is defined as D_{dif95%},
   a maximum value C_{Nimax} of a Ni concentration and a maximum value C_{αmax} of the concentration of a metal component α in D_{dif1%} to D_{dif95%} satisfy the following formulas (1) to (3),
   when the depth of a point at which a Ni concentration reaches the C_{Nimax} is defined as D_{Nimax} and the depth of a point at which the concentration of the metal component α reaches the C_{αmax} is defined as D_{αmax}, the following formula (4) is satisfied, and
   the metal component α is one or more selected from the element group: ${C}_{αmax} < {C}_{Nimax}$ $0.05 \leq {C}_{αmax} / \left({C}_{Nimax}+{C}_{αmax}\right) < 0.50$ $0.2 % < {C}_{αmax}$ $\left|{D}_{αmax}-{D}_{Nimax}\right| \leq 0.1 μm$
[2] The coated steel material according to [1] may satisfy the following formulas (5) and (6): $3.5 % < {C}_{αmax}$ $0.2 \leq {C}_{αmax} / \left({C}_{Nimax}+{C}_{αmax}\right)$
[3] The coated steel material according to [1] or [2] may satisfy the following formulas (7) and (8) when the depth of a point at which an Fe concentration reaches 50% is defined as D_{if50%} in the element distribution profile: $7.50 \leq \left({D}_{dif 95 %}\right) - \left({D}_{dif 50 %}\right)$ $\left({D}_{dif 50 %}\right) - \left({D}_{dif 1 %}\right) \leq 10.00$

### Advantageous Effects of Invention

According to the embodiment of the present invention, it is possible to provide a hot-dip coated steel material that has improved corrosion resistance in an exposed portion of the surface of the steel material and enhanced long-term corrosion resistance.

### BRIEF DESCRIPTION OF DRAWINGS

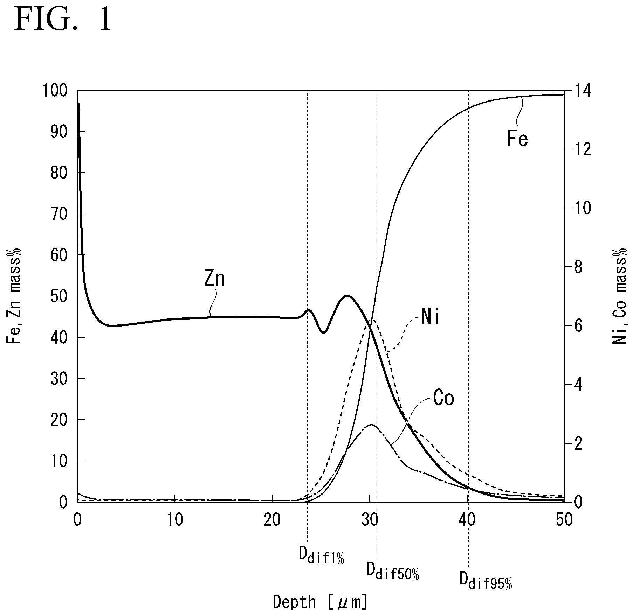

[FIG. 1] A diagram representing a result of GDS analysis in a coated layer of a hot-dip coated steel material according to an embodiment of the present invention, and a graph showing an example of an elemental distribution profile.

### DESCRIPTION OF EMBODIMENTS

Hereinafter, a hot-dip coated steel material according to an embodiment of the present invention will be described.

Note that, in the present specification, the "%" indication of the amount of each element in a chemical composition of a coated layer means "mass%" unless otherwise specified.

In addition, a numerical range represented by "to" means a range including the numerical values described before and after "to" as the lower limit and the upper limit. Note that a numerical range in which "more than" or "less than" is attached to the numerical values described before and after "to" means a range not including these numerical values as the lower limit or the upper limit.

The "corrosion resistance" described in the present specification indicates a property that the coated layer itself is hardly corroded. A Zn-based coated layer has a sacrificial corrosion protection action on a steel material (base steel). Therefore, in the corrosion process of a coated steel sheet, the coated layer corrodes and turns into white rust before the steel material corrodes, and after the coated layer turns into white rust and disappears, the steel material corrodes, resulting in the formation of red rust.

The "sacrificial corrosion resistance" described in the present specification indicates a property of suppressing corrosion of the steel material at an exposed portion of the steel material (base steel) (for example, a cut end surface portion of the coated steel material and a portion where the steel material is exposed due to cracking of the hot-dip coated layer during processing).

First, the results of studies by the present inventors on means for suppressing deterioration of corrosion resistance in an exposed portion where a steel material is exposed by processing or the like will be described below.

As described above, it is considered that stainless steel is preferably used as the base steel of the coated steel material in order to improve corrosion resistance in the exposed portion of the base steel and suppress sacrificial corrosion resistance. However, it is not practical to use stainless steel as the base steel, because of difficulty in forming a coated layer on stainless steel.

On the other hand, it is considered that when Cr, Ni, and the like are present on the surface of the base steel, passivation on the surface of the base steel is promoted, and the elution of Fe can be greatly suppressed. When the elution of Fe is suppressed, it is not necessary for the surrounding coated layer to electrically exert a sacrificial corrosion protection action, so that the corrosion promoting action of the coated layer itself is suppressed. As a result, the original corrosion resistance of the coated layer can be maintained, leading to further prolonged service life of the coated steel material. Therefore, the present inventors have developed a hot-dip coated steel material in which the corrosion promoting effect is canceled and excellent long-term corrosion resistance is obtained by selecting elements having a passivation action, such as Cr and Ni, and disposing these elements at the interface between the coated layer and the base steel.

In general, when a passivating element such as Cr is present on the steel sheet, the steel sheet is less likely to be reduced. Thus, even if the steel sheet is subsequently plated, the adhesion of the coated layer often deteriorates due to formation of an oxide film. When the adhesion of the coated layer is reduced, the coated layer may be easily peeled off, or the coated layer may not be adhered (bare spots) in the first place.

On the other hand, Ni contained in stainless steel is known as an element that improves wettability during plating (for example, Patent Document 3). Therefore, if passivating elements such as Cr are co-deposited on the surface of the base steel simultaneously with Ni to simultaneously secure plating wettability while maintaining passivation of the surface of the base steel, as a result, it is possible to prepare a coated steel sheet having excellent corrosion resistance in the base steel exposed portion and excellent long-term corrosion resistance.

Furthermore, based on the above new findings, the present inventors have studied the mechanism of deterioration of corrosion resistance in the base steel exposed portion, and the influence of components forming a passive film, such as Cr and Ni at the interface between the base steel and the coated layer.

In general, when the coated steel material is subjected to processing such as bending and drawing, the coated layer may be cracked, and when the coated layer is cracked, the base steel is exposed at the cracked portion. Since the main component of the base steel is Fe, an anode reaction and a cathode reaction occur between the exposed portion and the coated layer around the exposed portion. As a result, corrosion of the base steel having poor corrosion resistance is prevented by this sacrificial corrosion protection action. However, since the sacrificial corrosion protection action by the coated layer promotes corrosion of the coated layer itself, the present inventors have studied suppression of these electrochemical reactions and application of the mechanism of corrosion resistance of stainless steel to a coated steel material.

Stainless steel is a type of steel containing Cr and Ni in addition to Fe as components. In the case of stainless steel, when an extremely thin passive film is formed on the surface of the base metal by Cr and Ni contained, the electrochemical reaction is greatly suppressed, whereby stainless steel exhibits excellent corrosion resistance in various environments. By utilizing this action, the present inventors have found a structure in which an exposed portion of a coated steel material becomes pseudo stainless steel, that is, a structure in which a corrosion resistance mechanism similar to that of stainless steel can be exhibited at the exposed portion.

Specifically, a metal layer containing components forming a passive film, such as Cr, Ni, or the like is provided between the base steel and the coated layer. As described above, by providing the metal layer containing components effective for forming a passive film on the surface of the base steel, excellent corrosion resistance can be exhibited even when the base steel is exposed in the coated steel material.

As long as only the passivation action is exhibited, only Cr is effective. However, since Cr forms a stable oxide film even under a small amount of oxygen concentration, when a large amount of Cr is present on the base steel which is the base steel sheet for plating, the plating properties deteriorate, and bare spots may frequently occur. Meanwhile, Ni has an action of eliminating bare spots, that is, an action of enhancing adhesion to the coated layer. Thus, it is possible to eliminate bare spots caused by Cr by depositing Cr and Ni simultaneously on the base steel. Furthermore, by appropriately treating a coated steel material using a base steel in which both Cr and Ni are deposited on the surface as a base steel sheet in a high-temperature internal oxidation atmosphere, the coated layer can be sufficiently adhered. As a result, corrosion resistance of the entire coated steel material including the exposed portion can be improved.

The element that can be deposited together with Ni may be Mo, W, Co, or Mn in addition to Cr. It has been found that Mo and W can exert the same action as Cr, which belongs to the same group, and Co and Mn can also exert the same action as Cr. That is, the above effect can be obtained by co-depositing Cr, Mo, W, Co or Mn and Ni on the surface of the base steel.

When there is a metal layer containing a noble metal similar to stainless steel at the interface between the coated layer and the base steel, it is considered that corrosion is promoted by a coupling reaction. However, when there is a less noble metal layer as in a normal Zn-based plated steel sheet, the amount of corrosion promoted by sacrificial corrosion protection in the exposed portion is overwhelmingly larger than the amount of corrosion due to corrosion protection action in the case of including a metal layer containing a noble metal. Therefore, in the coated steel sheet including the metal layer containing Cr and Ni which are noble metals at the interface between the base steel and the coated layer, the corrosion resistance at the exposed portion can be significantly improved. Therefore, high corrosion resistance can be maintained even after corrosion reaches the base steel.

### [Hot-Dip Coated Steel Material]

A hot-dip coated steel material according to an embodiment of the present invention will be described.

The hot-dip coated steel material according to the present embodiment includes a steel material and a coated layer disposed on a surface of the steel material.

The average chemical composition of the coated layer includes, in terms of mass%,
Al: more than 10.0% and less than 40.0%,
Mg: 3.0% or more and 15.0% or less,
Ni: 0.03% or more and 5% or less,
Si: 0% or more and 2.0% or less,
Sn: 0% or more and 0.7% or less,
Bi: 0% or more and 0.3% or less,
In: 0% or more and 0.3% or less,
Ca: 0% or more and 0.6% or less
Y: 0% or more and 0.3% or less,
La: 0% or more and 0.3% or less,
Ce: 0% or more and 0.3% or less,
Sr: 0% or more and 0.3% or less,
Li: 0% or more and 0.3% or less,
Fe: 0% or more and 5.0% or less,
Cr: 0% or more and 3.00% or less,
Mo: 0% or more and 3.00% or less,
W: 0% or more and 3.00% or less,
Mn: 0% or more and 3.00% or less,
Co: 0% or more and 3.00% or less,
Zr: 0% or more and 0.25% or less,
Cu: 0% or more and 0.25% or less,
Ag: 0% or more and 0.25% or less,
Ti: 0% or more and 0.25% or less,
Nb: 0% or more and 0.25% or less,
Sb: 0% or more and 0.25% or less,
Pb: 0% or more and 0.25% or less,
B: 0% or more and 1.5% or less,
P: 0% or more and 1.5% or less,
V: 0% or more and 0.25% or less, and a remainder of Zn and impurities.

However, in the chemical composition, the total amount of one or more elements selected from the element group α consisting of Cr, Mo, W, Mn and Co is 0.03% or more.

### (Steel Material)

A steel material to be plated will be described.

The steel material is, for example, mainly a steel sheet, but its size is not particularly limited. The steel sheet may be a steel sheet applicable to a general hot-dip galvanizing step. Specifically, steel sheets applicable in a step of solidification by immersion in molten metal, such as a continuous hot-dip galvanizing line (CGL), apply to this. As the size of the steel sheet, for example, a steel sheet having a sheet thickness of 10 mm or less and a sheet width of 2000 mm or less can be applied, but the size of the steel sheet is not limited thereto.

The material of the steel material is not particularly limited. As the steel material, for example, various steel sheets such as a general steel, an Al-killed steel, an ultra-low carbon steel, a high carbon steel, various high tensile strength steels, some high alloy steels (a steel containing a corrosion resistance reinforcing element such as Ni or Cr), a bolt steel, and a steel wire rod for bridge cable can be applied. More specifically, for example, a cold-rolled steel sheet defined in JIS G 3131 or 3141, a steel sheet included in a rolled steel material for general structure corresponding to a so-called SS material, a so-called general steel included in a hot-rolled steel sheet defined in JIS G3193, a pre-plated steel in which various metals are thinly plated, such as JIS H8641, JIS G

3302, 3303, 3313, 3314, 3315, 3317, and 3321, and an Al killed steel of JIS G 3136, an ultra-low carbon steel, a high carbon steel, and various high tensile strength steels described in JIS G 3113, 3134, and 3135 can be applied.

### (Coated layer)

Next, the coated layer provided on the steel material will be described. The coated layer according to the present embodiment includes a metal layer (Ni-containing metal layer) containing Ni and a metal element α provided on a steel material, and a Zn-Al-Mg-based alloy layer provided on the metal layer. The Zn-Al-Mg-based alloy layer contains, for example, a Zn phase, an Al phase, and an MgZn₂ phase.

In a case where an alloying element such as Al or Mg is contained in Zn, corrosion resistance is improved. Therefore, such a coated layer containing the Zn phase can exhibit corrosion resistance equivalent to that of a conventional Zn-plating layer even though the coated layer is formed as a thin film (for example, a thickness of about a half of the conventional Zn-plating layer). Similarly, even in a case where the coated layer of the present embodiment is formed as a thin film, corrosion resistance equal to or higher than that of the conventional Zn-plating layer is secured. The Zn-Al-Mg-based alloy layer is a portion that is the main component of the coated layer in the present embodiment.

The Zn-Al-Mg-based alloy layer is made of a Zn-Al-Mg-based alloy. The Zn-Al-Mg-based alloy means a ternary alloy containing Zn, Al, and Mg.

A metal layer (Ni-containing metal layer) containing Ni and a metal element α is provided between the steel material and the Zn-Al-Mg-based alloy layer. The metal layer is made of a binary alloy containing Ni and a metal element α. Since this binary alloy is a metal deposited by the eutectoid reaction, Ni and the metal element α exist at substantially the same depth position in the depth direction from the surface of the coated layer toward the steel material. The "metal element α" is one selected from the element group consisting of Cr, Mo, W, Mn, and Co.

As described above, the coated layer of the present embodiment includes a two-layer structure of the Zn-Al-Mg-based alloy layer and the metal layer present at the interface with the steel material. The thickness of the metal layer is smaller than that of the Zn-Al-Mg-based alloy layer, and is, for example, 0.01 to 1.00 µm. The metal layer is assumed to play an auxiliary role in the performance of the Zn-Al-Mg-based alloy layer.

The thickness of the entire coated layer (Zn-Al-Mg-based alloy layer + metal layer) is not particularly limited. For example, when the Zn-Al-Mg-based alloy layer is formed by a continuous hot-dip plating method, the thickness of the coated layer may be, for example, 100 µm or less.

Next, an analysis method for the components the coated layer in the depth direction according to the present embodiment will be described.

As the analysis method for components in the coated layer in the depth direction, glow discharge optical emission spectrometry (GDS) with a glow discharge optical emission spectrometer may be used. In the present embodiment, "LECO JAPAN 850A" is used as a glow discharge optical emission spectrometer. In the case of performing analysis in the depth direction, it is preferable to perform analysis while performing Ar sputtering. The analysis conditions are as follows: argon pressure: 0.27 MPa, output power: 30 W, output voltage: 1000 V, and discharge region: in a circular region having a diameter of 4 mm.

The component analysis by GDS is performed from the surface side of the coated layer toward the depth direction until the Fe concentration reaches close to 100% (reaches the base metal). Therefore, the analysis range of the depth direction analysis by GDS is a range reaching from the surface of the coated steel material to the Zn-Al-Mg-based alloy layer, the metal layer, and a part of the steel material. After the GDS analysis, the sputtering depth of the cross section is measured using surfcom130A manufactured by Tokyo Seimitsu Co. Ltd. The elemental distribution profile of the coated layer in the depth direction is obtained by the component analysis using GDS. In the elemental distribution profile, in a case where the total amount of the detected elements is 100%, the distribution of the amount of each element in the depth direction is illustrated.

In the present embodiment, the surface of the coated layer (that is, the surface of the Zn-Al-Mg-based alloy layer) is set as a zero point, and the position of the interface between the Zn-Al-Mg-based alloy layer and the metal layer and the position of the interface between the metal layer and the steel material are determined according to the concentration distribution of Fe. Specifically, the end of the Zn-Al-Mg-based alloy layer (that is, the start of the metal layer) is set to a position (D_{dif1%}) where the Fe concentration shows the quantitative analysis value of 1 mass%. In addition, the end of the coated layer (that is, the interface position between the metal layer and the steel material) is set to a position (D_{dif95%}) where the Fe concentration shows 95 mass%. The definition of "quantitative analysis value of 1 mass%" is a position where the Fe concentration continuously increasing in the direction of the base steel indicates 1 mass%. The determination on the surface of the coated layer is made at the position where the Zn concentration shows the quantitative analysis value of 5 mass% or more for the first time.

The metal layer included in the coated layer will be described in more detail.

The metal layer is made of a binary alloy containing Ni and a metal element α. This binary alloy is a metal deposited by a eutectoid reaction, and the "metal element α" is one or more selected from the element group consisting of Cr, Mo, W, Mn, and Co.

A Zn-Al-Mg-based alloy layer is provided on the metal layer. In order to sufficiently secure adhesion between the metal layer and the Zn-Al-Mg-based alloy layer, it is effective to increase the amount of Ni having high reactivity with the plating bath and excellent wettability in the metal layer.

In the metal layer of the present embodiment, in the element distribution profile, the maximum value C_{Nimax} of the Ni concentration and the maximum value C_{αmax} of the concentration of the metal component α in D_{dif1%} to D_{dif95%} satisfy the following formula (1).${C}_{αmax} < {C}_{Nimax}$

By disposing the metal layer mainly containing Ni so as to satisfy the formula (1), passivation of the surface of the steel material by the metal element α can be achieved while securing adhesion between the Zn-Al-Mg-based alloy layer and the metal layer, and as a result, corrosion resistance of the coated steel material can be improved.

In the present embodiment, the Ni content in the metal layer is desirably more than 50%. The Ni content is more preferably 70% or more.

In addition, it is effective from the viewpoint of plating properties and corrosion resistance that the metal layer of the present embodiment mainly contains Ni. There is no limitation on whether the metal layer is a Ni-α-based metal layer (that is, a binary system), a Ni-α1-α2-based metal layer (that is, a ternary system), or more (Ni-α1, α2...,). Here, even when the metal layer contains two or more metal elements α (for example, α1, α2,...), the position where the concentration of each of the metal components α1 and α2 is maximized does not greatly vary. However, in the present embodiment, when the metal layer contains two or more metal elements α (for example, α1, α2,...), the maximum value of the concentration of the metal element having the highest concentration among the two or more metal elements α is defined as "C_{αmax}".

Since Ni and α in the metal layer are co-deposited, depths at which the concentrations of Ni and α reach the highest concentrations are almost the same.

For example, when a case where Ni and α are individually deposited in the order of α, Ni, or Ni, α from the Fe side (steel material side) is compared with a case where Ni and α are deposited simultaneously as in the present embodiment, a difference in performance appears between both cases. In the former case of the individually deposited lamination type, performance unique to each metal of Ni and α appears, whereas in the case of co-depositing Ni and α as in the present embodiment, performance as an alloy appears.

Ni and α are simultaneously diffused in the base steel in contact with the metal layer, and Fe is diffused in the metal layer. For example, elements of the metal layer and the base steel are mutually diffused to some extent between the metal layer and the base steel during annealing of the base steel sheet or immersion in a plating bath. By this mutual diffusion, the form of the metal layer on the base steel side can be made into an alloy containing Cr, Ni, and Fe, so that a surface state close to stainless steel can be obtained at the interface between the metal layer and the base steel.

Furthermore, when the coated layer is subjected to processing such as bending, extrusion, and cutting, cracks may be generated in the processed portion, and the base steel is exposed around the cracks. When moisture comes into contact with the exposed portion, an anode reaction of Fe → Fe²⁺ + 2e⁻ occurs, but corrosion of the base steel can be prevented by the sacrificial corrosion protection action of the coated layer around the exposed portion. As described above, while the base steel can be protected by the action of the coated layer, conventionally, there is a problem that corrosion of the coated layer itself is promoted.

On the other hand, in the present embodiment, since the metal layer whose surface is made stainless steel is provided at the interface with the base steel, corrosion of the surface of the base steel is prevented by the passive film, so that an excessive sacrificial corrosion protection action is not caused around the exposed portion. The anode reaction of Fe as described above is repeated as long as the exposed portion exists, and corrosion of the coated layer is promoted due to the sacrificial corrosion protection action. Therefore, making the interface stainless steel enables to suppress the corrosion of the base steel itself, and thus is a very useful anticorrosive means.

The corrosion resistance of the exposed portion can be confirmed by, for example, further performing a severe corrosion test such as a corrosion acceleration test on a test piece obtained by a 1T bending test (T represents the number of plates sandwiched inside the bending), and checking the generation timing of red rust. The coated steel material of the present embodiment in which the metal layer is provided at the interface has high corrosion resistance.

The corrosion resistance of the metal layer largely depends on the concentrations of the alloy components of the metal layer. As described above, when the main component of the alloy component of the metal layer is not Ni, the passivation effect is insufficient, and the effect of improving corrosion resistance is not observed. Furthermore, it is effective that Ni and Cr, Mo, W, Mn or Co are co-deposited in the metal layer. Specifically, in order to exert the action of passivation, the following formula (2) is satisfied.$0.05 \leq {C}_{αmax} / \left({C}_{Nimax}+{C}_{αmax}\right) < 0.50$

In the formula (2), 0.2 ≤ C_{αmax}/(C_{Nimax} + C_{αmax}) is more preferable, and 0.25 ≤ C_{αmax}/(C_{Nimax} + C_{αmax}) is still more preferable.

When the formula (2) is satisfied, even when cracks occur in the coated layer, the promotion of corrosion in the lower layer of the coated layer is greatly suppressed. As a result, the period until the red rust generation cycle in the processed portion (the top portion in the case of the 1T bending test) becomes long. When C_{αmax}/(C_{Nimax} + C_{αmax}) is 0.50 or more, since the main component of the metal layer is α, it is difficult to secure plating wettability, and corrosion resistance and plating adhesion may deteriorate. On the other hand, when C_{αmax}/(C_{Nimax} + C_{αmax}) is less than 0.05, corrosion resistance may deteriorate. It is to be noted that when alloying of the metal layer is further progressed, the metal layer becomes electrically less noble, and the potential difference from the coated layer as a coupling reaction becomes smaller, resulting in a stronger passive film.

On the other hand, in order to form a passive film at the interface, the entire surface of the base steel needs to be coated with Ni and the metal element α and alloyed. That is, it is effective to secure a certain amount or more as the adhesion amount of the metal layer.

In the present embodiment, C_{αmax} is used as an index of the adhesion amount of the metal layer. Specifically, the coated steel material of the present embodiment satisfies the following formula (3) in order to achieve stable passivation at the interface and improvement in corrosion resistance.$0.2 % < {C}_{αmax}$

By satisfying the formula (3), the soundness of the passive film can be enhanced while securing the thickness of the metal layer. As a result, the number of red rust cycles of the exposed portion can also be greatly improved. If C_{αmax} is too small, corrosion resistance in the exposed portion may not be sufficiently improved. Therefore, in the present embodiment, C_{αmax} is preferably more than 3.5% and more preferably more than 5.0%. It is preferable that C_{αmax} is large from the viewpoint of corrosion resistance, but if C_{αmax} is excessively large, adhesion to the Zn-Al-Mg-based alloy layer may deteriorate. Therefore, C_{αmax} may be preferably 25.0% or less.

In addition, as described above, the metal layer of the present embodiment is a Ni-α-based metal in which Ni and α are co-deposited. Therefore, the depths at which Ni and α reach the highest concentrations are almost the same. That is, the metal layer of the present embodiment satisfies the following formula (4).$\left|{D}_{αmax}-{D}_{Nimax}\right| \leq 0.1 μm$

A case where the formula (4) is satisfied indicates that α and Ni are uniformly dispersed in the metal layer regardless of which part of the coated steel material is acquired. On the other hand, a case where |D_{αmax} - D_{Nimax}| is more than 0.1 µm indicates, for example, that unevenness of atomic distribution exists in either the thickness direction of the metal layer or the extending direction of the layer. In particular, a case where |D_{αmax} - D_{Nimax}| is excessively large indicates that a concentrated layer of α, Ni, or the like is distributed near the interface on either the base steel side or the coated layer side. That is, the case where |D_{αmax} - D_{Nimax}| is excessively large indicates that corrosion at the time of 1T bending easily proceeds to some extent in the vicinity of the interface. When a concentrated layer containing Ni and/or α is formed in the metal layer, a side of the metal having a low potential of either Ni or α is preferentially corroded, resulting in an increase in the total corrosion rate.

A case where a metal layer is provided by simultaneously depositing (co-depositing) Ni and α on the steel material as in the present embodiment is more advantageous than a case where individual layers are formed by sequentially and individually plating Ni and α. From the viewpoint of securing corrosion resistance, |D_{αmax} - D_{Nimax}| is set to 0.1 µm or less, and preferably 0.05 µm or less. Note that |D_{αmax} - D_{Nimax}| can be controlled by adjusting the dew point in the pre-annealing.

In addition, in the element distribution profile, when the depth of the point at which the Fe concentration reaches 50% is D_{dif50%}, (D_{dif95%}) - (D_{dif50%}) is an index representing the degree of diffusion in the depth direction. The larger this (D_{dif95%}) - (D_{dif50%}) is, the more the diffusion of the metal element α and the Ni atom into the base steel progresses. In addition, (D_{dif50%}) - (D_{dif1%}) is also an index indicating Fe atoms reaching the surface of the alloy layer on the side opposite to the base metal. For example, when the following formulas (7) and (8) are satisfied, the corrosion promoting action when one end of corrosion reaches the interface can be reduced in the corrosion acceleration test.$7.5 μm \leq \left({D}_{dif 95 %}\right) - \left({D}_{dif 50 %}\right) \left(7\right) \left({D}_{dif 50 %}\right) - \left({D}_{dif 1 %}\right) \leq 10 μm \left(8\right)$

Typically, when one end of the corrosion reaches the base steel, the corrosion rate becomes 50 to 100 times higher. On the other hand, when the above formulas (7) and (8) are simultaneously satisfied, it is possible to significantly suppress an increase in the corrosion rate after one end of the corrosion reaches the base steel. Specifically, it is possible to suppress the corrosion rate after one end of the corrosion reaches the base steel to less than 25 times the corrosion rate before one end of the corrosion reaches the base steel. However, when only one of the formulas (7) and (8) is satisfied, the degree of diffusion of Ni, α, and Fe atoms is not sufficient, and the effect of suppressing corrosion promotion is also slightly reduced. In this case, the corrosion rate is suppressed to about 50 times.

The formulas (7) and (8) indicate that it is desirable that the thickness of the metal layer is appropriate and Fe and the metal layer are appropriately alloyed.

The thickness of the metal layer in the present embodiment is not particularly limited, but can be, for example, more than 7.5 µm.

As described above, the coated layer of the present embodiment includes a two-layer structure of the Zn-Al-Mg-based alloy layer and the metal layer present at the interface with the steel material. Rarely, a part of the components of the metal layer and the coating, or elements contained in the metal layer may diffuse to the base metal (Fe) side. When the components of the metal layer and the coated layer react with each other, an intermetallic compound may be formed between the Zn-Al-Mg-based alloy layer and the metal layer. However, even in these cases, the local maximum values of the Ni and α components exist at the original metal layer positions.

Next, the average chemical composition of the coated layer will be described.

The average chemical composition of the coated layer of the present embodiment is the average chemical composition of the entire coated layer. That is, it is the average chemical composition of the Zn-Al-Mg-based alloy layer and the metal layer. In the metal layer, a certain amount of Fe may diffuse from the base steel. In some cases, Fe may also diffuse into the Zn-Al-Mg-based alloy layer. The interface between the coated layer and the base metal may be defined by the degree of diffusion of Fe, but in the present embodiment, the concentration distribution near the interface is complicated, and thus, the definition of the interface in the present embodiment is determined by GDS as described above.

### Al: more than 10.0% and less than 40.0%

Al is an element mainly constituting the coated layer. When the Al content is 10.0% or less, corrosion resistance required as a highly corrosion-resistant coated steel sheet may not be secured. Therefore, the Al content is more than 10%. The Al content is preferably 12.0% or more. On the other hand, when the Al content is 40.0% or more, the sacrificial corrosion resistance itself of the coated layer decreases. As a result, the sacrificial corrosion resistance required as highly corrosion-resistant plating may not be secured in the cut portion, the bent portion, and the like. In addition, when the Al content is excessively large, reactivity with the metal layer tends to be poor, leading to a slight increase in bare spots. Therefore, the Al content is less than 40.0%. The Al content is preferably 37.0% or less.

### Mg: 3.0% or more and 15.0% or less

Similarly to Zn, Mg is an element mainly constituting the coated layer. Mg is an element for securing corrosion resistance of the coated layer. When the Mg content is less than 3.0%, corrosion resistance required as a highly corrosion-resistant coated steel sheet may not be secured. Therefore, the Mg content is 3.0% or more. The Mg content is preferably 4.5% or more. On the other hand, even when the Mg content is excessively large, sufficient corrosion resistance may not be obtained. Therefore, the Mg content is 15.0% or less. The Mg content is preferably 13.0% or less.

### Ni: 0.03% or more and 5.0% or less

In the present embodiment, Ni is an effective element that enhances the wettability of the coated layer and improves the plating adhesion. In addition, Ni is an element that has high current efficiency and is easily co-deposited with other metals, and thus is preferable as a main component of the metal layer. Ni can be co-deposited with metal elements such as Cr, Mo, W, Mn, and Co. The Ni content is 0.03% or more. The Ni content is preferably 0.5% or more. When Ni is contained in the metal layer, Ni is also contained in the coated layer, so that Ni is contained at 5.0% at the maximum in the entire coated layer. The thicker the metal layer, and the thinner the Zn-Al-Mg-based alloy coated layer, the higher the average concentration of Ni in the entire coated layer. In addition, since Ni is likely to be concentrated as a metal layer, a region where the Ni content exceeds 5.0% may partially exist in the coated layer.

### Si: 0% or more and 2.0% or less

Si is an element that can be added to the Zn-Al-Mg-based alloy layer. When Si is contained, an excessive alloying reaction between the base metal and the coated layer can be prevented. On the other hand, when the Si content is excessively large, the plating appearance may deteriorate, and the corrosion resistance may also deteriorate. Therefore, the Si content is 2.0% or less. The Si content is preferably 1.6% or less.
Sn: 0% or more and 0.7% or less
Bi: 0% or more and 0.3% or less
In: 0% or more and 0.3% or less

Each element of Sn, Bi, and In is an element that promotes softening and sacrificial corrosion resistance of the coated layer when contained in the coated layer. Since Sn, Bi, and In are elements that can be optionally contained, each content is 0% or more. On the other hand, when Sn, Bi, and In are excessively contained, the action of promoting sacrificial corrosion protection becomes strong, and corrosion resistance may deteriorate. Therefore, the Sn content is 0.7% or less, and each of Bi and In is 0.3% or less.
Ca: 0% or more and 0.6% or less
Y: 0% or more and 0.3% or less
La: 0% or more and 0.3% or less
Ce: 0% or more and 0.3% or less
Sr: 0% or more and 0.3% or less
Li: 0% or more and 0.3% or less

Ca, Y, La, Ce, Sr, and Li are also elements that can be contained in the coated layer within the above composition range. When the contents of these elements are within the above range, there is no influence on corrosion resistance, particularly, no influence on corrosion resistance in a portion exposed by processing or the like. However, when these elements are excessively contained, a potential difference may be generated in the coated layer, and corrosion resistance may deteriorate. Therefore, when these elements are contained, the amounts thereof may be within the above range.
Cr: 0% or more and 3.00% or less
Mo: 0% or more and 3.00% or less
W: 0% or more and 3.00% or less
Mn: 0% or more and 3.00% or less
Co: 0% or more and 3.00% or less

Cr, Mo, W, Mn, and Co are elements that can be contained in the coated layer within the above composition range. When these elements are contained, they can be added to the plating bath, but can be contained in the coated layer by being deposited simultaneously with Ni in the metal layer. In the present embodiment, 0.03% or more of one or more selected from the group consisting of Cr, Mo, W, and Co is contained. When the total amount of these element groups is less than 0.03%, the useful corrosion resistance effect according to the present embodiment cannot be obtained. On the other hand, when the amount of each of Cr, Mo, W, Mn, and Co is more than 3.00%, the adhesion of the coated layer deteriorates, and corrosion resistance and the like may become poor. Therefore, when Cr, Mo, W, Mn, or Co is contained, the amounts thereof are preferably within the above range.
Cu: 0% or more and 1.0% or less
Ag: 0% or more and 0.25% or less
Sb: 0% or more and 0.25% or less
Pb: 0% or more and 0.25% or less
B: 0% or more and 0.5% or less
P: 0% or more and 0.5% or less
Ti: 0% or more and 0.25% or less
V: 0% or more and 0.25% or less
Nb: 0% or more and 0.25% or less
Zr: 0% or more and 0.25% or less

All of Cu, Ag, Sb, Pb, B, P, Ti, V, Nb, and Zr form an intermetallic compound with Si, Zn, Al, or the like. However, in a case where the contents of these elements are within the above range, the elements do not affect the initial corrosion of the coated layer. On the other hand, in a case where these elements are excessively contained, a potential difference may be generated in the coated layer, and a large amount of initial white rust may be formed. Therefore, in a case where these elements are contained, the amounts thereof may be within the above range.

### Fe: 0% or more and 5.0% or less

Since the hot-dip coated steel material of the present embodiment is manufactured by a hot-dip plating method, Fe may be diffused into the coated layer from the steel material (base metal) during manufacturing. As a result, Fe may be contained in the coated layer up to 5.0%, but Fe does not affect the frequency of occurrence of cracks and the like in the coated layer as long as the Fe content is limited to 5.0% or less. Therefore, the Fe content is 0 to 5.0%. The Fe content may be more than 0%.

### Remainder: Zn and impurities

The remainder preferably contains Zn. Since the hot-dip coated steel material of the present embodiment is a highly versatile Zn-based coated steel material, the element constituting the main phase of the coated layer is Zn.

In the coated layer, for example, a small amount of components other than Fe may also be mixed as impurities due to mutual atomic diffusion between the steel material (base metal) and the plating bath, or derived from raw materials. In addition, in many cases, metals having a purity of 3N, such as Zn, Al, or Mg, are normally used to manufacture the coated layer. Therefore, the concentrations of impurities in the coated layer may be approximately 0.03% or less in total.

In order to identify the average chemical composition of the coated layer, an acid solution is obtained in which the coated layer is peeled off and dissolved with an acid containing an inhibitor that suppresses corrosion of the base metal (steel material). Next, the obtained acid solution is measured by ICP emission spectrometry or an ICP-MS method to obtain the chemical composition. The type of the acid is not particularly limited as long as the acid can dissolve the coated layer. In a case where the area and weight before and after peeling are measured, a plating adhesion amount (g/m²) can also be obtained at the same time.

### [Method for Manufacturing Hot-Dip Coated Steel Material]

Next, a method for manufacturing the hot-dip coated steel material of the present embodiment will be described.

The manufacturing method of the coated steel material according to the present embodiment is not particularly limited as long as the coated layer as described above can be obtained. Hereinafter, as a preferable mode for manufacturing the coated steel material of the present embodiment, a method of forming a Ni-containing plating layer on the steel material in advance by plating before forming the coated layer will be described.

First, a steel material (base steel) for forming a coated layer is prepared. Suitable steel materials are as described above, and examples thereof include general steel, high tensile strength steel, and low carbon steel.

Examples of the manufacturing step of the steel material include general steps such as an iron making and steelmaking step by a blast furnace or an electric furnace, a hot rolling step, a pickling step, a cold rolling step, and a heat treatment step. The steel material of the present embodiment may be subjected to any step, and the treatment conditions of each step are not limited.

Next, a Ni-α-based plating layer (metal layer) is formed in advance on the surface of the steel material having been sufficiently degreased and pickled. The plating means may be hot-dip plating, electro plating, substitution plating, or vapor deposition (PVD or the like). Furthermore, these Ni-α-based plating layers may be heated and alloyed. The steel material on which the Ni-α-based plating layer is formed is used as a base steel sheet of hot-dip plating.

In the manufacturing method of the Ni-α-based plating layer, electro plating is suitable because the plating layer can be formed thin. In addition, vapor deposition (PVD) is also applicable because Ni and the metal element α can be simultaneously adhered to the steel material.

The adhesion amount of the Ni-α-based plating layer by electro plating can be adjusted by controlling the cumulative energization time. The adhesion amount of the Ni-α-based plating layer is preferably, for example, 0.2 to 8.9 g/m².

When a Ni-Cr plating layer is formed as an example of the Ni-α-based plating layer, a bath in which sodium chloride, boric acid, and dimethylformamide (DMF) are added to nickel chloride hexahydrate and chromium chloride hexahydrate can be used as the plating bath. When a Ni-W plating layer is formed as an example of the Ni-α-based plating layer, a plating bath in which nickel sulfate is added to Na tungstate can be used. A Ni-Co plating layer can be formed by electro plating using a mixed bath of nickel sulfate, cobalt sulfate, and boric acid.

Next, before immersion in the plating bath, the base steel sheet (metal layer adhered) is annealed in a hydrogen reducing atmosphere.

As described above, Ni is an element effective for securing the adhesion amount of the coated layer because of its excellent wettability, but Cr, W, Mo, Mn, and Co are all elements that inhibit plating adhesion. In order to manufacture a hot-dip coated steel material with reduced bare spots and plating defects, the base steel sheet is annealed at 700°C or higher for 20 seconds or more before being immersed in the plating bath (hereinafter, this annealing may be referred to as pre-annealing.). In addition, the atmosphere of the pre-annealing is an atmosphere of 1% hydrogen and 99% nitrogen to 50% hydrogen and 50% nitrogen. As the temperature of the pre-annealing is higher and the holding time is longer, the alloying of the metal layer and the base steel proceeds. By proceeding the alloying of the metal layer and the base metal, the metal layer and the base metal become electrically less noble, and the potential difference between the metal layer and the coated layer as a coupling reaction becomes smaller, so that the passive film can also be made stronger.

Furthermore, in the pre-annealing, it is preferable to control the dew point by humidification. Specifically, by setting the dew point to 0°C or higher and setting the internal oxidation conditions, coating can be stably formed even in the coexistence of easily oxidizable elements such as Ca. Thus, a coated layer having less bare spots and stable corrosion resistance can be formed. As described above, when the dew point in the pre-annealing is controlled to be a condition for promoting the internal oxidation of the steel material, the reaction between oxygen and Ni and α on the steel material is suppressed. As a result, the degrees of diffusion of Ni and α into the steel material side can be substantially equal. On the other hand, when the dew point is negative, it is a condition for promoting external oxidation, so that there is a difference in ease of diffusion to the steel material side between α and Ni, and |D_{αmax} - D_{Nimax}| tends to increase.

Next, the base steel sheet after the pre-annealing is immersed in a plating bath. The hot-dip plating bath is a Zn-Al-Mg-based plating bath containing Zn as a base component. The Zn-Al-Mg-based plating bath may be a plating bath in which predetermined amounts of desired metals are mixed.

The temperature of the base steel sheet when the base steel sheet is immersed in the Zn-Al-Mg-based plating bath may be lowered to the plating bath temperature (range of 500 to 600°C). That is, by lowering the temperature of the base steel sheet to a level equivalent to the bath temperature of the Zn-Al-Mg-based plating bath after the pre-annealing, the temperature fluctuation of the plating bath after immersion can be reduced.

The immersion time in the plating bath is not particularly limited. For example, the immersion time is 1 to 10 seconds. After immersion, a wiping treatment with N₂ gas is performed immediately after pulling up the base steel sheet to thereby adjust the thickness of the coated layer.

Thereafter, cooling is performed by gas cooling until the coated layer is solidified. By setting the average cooling rate to be in the range of 10 to 20°C/sec and cooling by spraying N₂ gas to 100°C or lower after pulling up from the plating bath, a more homogeneous solidified structure can be obtained in the coated layer, and the performance of the coated layer can be stabilized.

As described above, Ni and the metal element α are co-deposited simultaneously on the steel material to form a Ni-α-based metal layer, and then a Zn-Al-Mg-based alloy layer is formed on the metal layer. As a result, a metal layer having performance similar to that of stainless steel can be disposed between the base steel and the coated layer. Therefore, the resulting plated steel material can exhibit excellent corrosion resistance even when the base steel is exposed by processing or the like.

It is important that the coated layer can be formed soundly (there are no bare spots). Determination of bare spots is performed as follows.

First, one sample of 70 × 70 mm is collected from a coated steel material so as to include the coated layer. Thereafter, the sample is extruded by 7 mm with an Erichsen tester, and the extruded sample is subjected to a tape peeling test. When the coated layer does not adhere to the surface of the tape after the tape peeling test, it is determined as "bare spots".

When the metal layer is formed on the surface of the steel material in advance, if respective elements are sequentially plated, that is, a Ni plating layer and a Cr plating layer are sequentially laminated on the base steel without co-depositing two kinds of metals, for example, Ni and Cr simultaneously, Ni is located on the base steel side, and Cr is located on the Zn-Al-Mg-based alloy layer side. Since Cr is difficult to reduce, it is difficult to eliminate bare spots. On the other hand, when plating is performed in the order of the Cr plating layer and the Ni plating layer, bare spots immediately after formation of the Zn-Al-Mg-based alloy layer are easily eliminated. However, adhesion between the Cr plating layer and the vicinity of the base steel is insufficient, and these layers are easily peeled off at the time of 1T bending. Therefore, in order to obtain the coated steel material of the present embodiment, Ni and the metal element α are preferably co-deposited on the surface of the steel material simultaneously.

Next, means for confirming the performance (corrosion resistance) of the hot-dip coated steel material will be described.

As a means for confirming the corrosion resistance of the processed portion of the coated layer, evaluation is performed by combining a 1T bending test and a cyclic corrosion test (CCT, JASO M609).

First, a 1T bending test piece is prepared. A sample having a size of 40 mm × 120 mm × 1.6 mm is collected and bent at the center of the width of 40 mm. Specifically, the sample is bent at 180°C by a jig with a 1T (corresponding to the thickness of one steel sheet) sandwiched inside the sample, and pressed to prepare a 1T bending test piece having a space corresponding to one steel sheet inside thereof.

Next, the 1T bending test piece is leaned against the CCT apparatus, and the occurrence of red rust is observed. The top of the 1T bending test piece is subjected to severe processing, and cracks occur in the coated layer, so that an exposed portion of the base steel inevitably occurs. In the present embodiment, the top of the 1T bending test piece (1T bending top) is photographed at every specified cycle, and evaluation is performed at the number of cycles at which the red rust generation area on the evaluation surface from the vertical direction reaches 50%. The "evaluation surface" is a region of 120 mm in the longitudinal direction of the test piece in the 1T bending top.

The evaluation criteria are as follows. "S", "A", "B", "C", "D" and [D'] are regarded as pass.

A case where the number of red rust generation cycles exceeds 540 cycles: "S"

A case where the number of red rust generation cycles is 480 to 540 cycles: "A"

A case where the number of red rust generation cycles is 420 to 480 cycles: "B"

A case where the number of red rust generation cycles is 360 to 420 cycles: "C"

A case where the number of red rust generation cycles is 300 to 360 cycles: "D"

However, a case where the number of red rust generation cycles is 300 to 330: [D']

A case where the number of red rust generation cycles is less than 300 cycles: "E"

The degree of acceleration of corrosion when the corrosion reaches the base steel is evaluated as follows.

A Zn-Al-Mg-based coated layer is prepared. The material used as a reference is a coated steel sheet obtained by using a cold-rolled steel sheet as a base steel sheet, and forming a Zn-Al-Mg-based coated layer on the steel sheet by a Sendzimir process.

The sample size is 50 × 100 mm.

From the verification result of the cross-section observation, it was found that when the number of cycles is 60 cycles or less, the corrosion starting from the coated layer does not reach the base steel. Thus, this period (60 cycles) is defined as τ1.

### Corrosion Rate_{τ1} (corrosion rate of τ1) (g/m²/cycle) = (corrosion loss of JASO60 cycles/60)

Meanwhile, after 60 cycles, corrosion reaches the base steel, and usually, corrosion of the coated layer is promoted by sacrificial corrosion protection action. However, there are many variations in the progress of corrosion during 60 to 120 cycles, and thus an appropriate evaluation may not be obtained. Therefore, in the present embodiment, a period after 120 cycles is defined as a period in which red rust appears on the surface of the coated layer, and this period (after 120 cycles) is defined as τ2. In the present embodiment, the following equation is defined as a corrosion rate at the initial stage of τ2 at which the coated layer sufficiently remains. 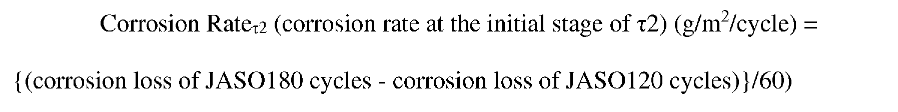Corrosion Rateτ2 (corrosion rate at the initial stage of τ2) (g/m2/cycle) = { (corrosion loss of JASO180 cycles - corrosion loss of JASO120 cycles) }/60)

As in the above equation, Corrosion Rate_{τ2} which is the corrosion rate at the initial stage of τ2 means a corrosion rate between 120 cycles and 180 cycles. Therefore, the corrosion acceleration rate AR of the coated layer due to sacrificial corrosion protection is defined as "τ2/τ1".

Normally, in the corrosion of the Zn-Al-Mg-based plating, τ1 << τ2, and the corrosion acceleration rate AR shows a value of 1 or more accordingly.

Since the period of τ1 hardly changes due to the addition of the metal layer in the present invention, the same idea can be applied.

The evaluation criteria are as follows. "S", "A", "B", "C", and "D" are regarded as passing.$AR \leq 5 : " S "$ $5 < AR \leq 15 : " A "$ $15 < AR \leq 25 : " B "$ $25 < AR \leq 35 : " C "$ $35 < AR \leq 45 : " D "$ $45 < AR : " E "$

After the coated layer is formed, various chemical conversion treatments and coating treatments may be performed.

In the hot-dip coated steel material of the present embodiment, a film may be formed on the coated layer. A film having a single layer or two or more layers may be formed. Examples of the type of the film immediately above the coated layer include a chromate film, a phosphate film, and a chromate-free film. A chromate treatment, a phosphating treatment, and a chromate-free treatment for forming these films can be performed by known methods.

The chromate treatment includes an electrolytic chromate treatment in which a chromate film is formed by electrolysis, a reaction type chromate treatment in which a film is formed by utilizing a reaction with the material and then the excess treatment liquid is washed away, and an application type chromate treatment in which a film is formed by applying a treatment liquid to an object to be coated and drying the treatment liquid without washing with water. Any treatment may be adopted.

Examples of the electrolytic chromate treatment include an electrolytic chromate treatment using chromic acid, a silica sol, a resin (phosphoric acid, an acrylic resin, a vinyl ester resin, a vinyl acetate acrylic emulsion, a carboxylated styrene-butadiene latex, a diisopropanolamine-modified epoxy resin, and the like), and hard silica.

Examples of the phosphating treatment include a zinc phosphate treatment, a zinc calcium phosphate treatment, and a manganese phosphate treatment.

The chromate-free treatment, which does not impose a burden on the environment, is particularly suitable. The chromate-free treatment includes an electrolytic chromate-free treatment in which a chromate-free film is formed by electrolysis, a reaction type chromate-free treatment in which a film is formed by utilizing a reaction with the material and then the excess treatment liquid is washed away, and an application type chromate-free treatment in which a film is formed by applying a treatment liquid to an object to be coated and drying the treatment liquid without washing with water. Any treatment may be adopted.

Further, an organic resin film made of a single layer or two or more layers may be formed on the film immediately above the coated layer. The organic resin is not limited to a specific type, and examples thereof include polyester resins, polyurethane resins, epoxy resins, acrylic resins, polyolefin resins, and modified products of these resins. Here, the modified product refers to a resin obtained by causing a reactive functional group included in the structures of these resins to react with another compound (a monomer, a crosslinking agent, or the like) having a functional group capable of reacting with the reactive functional group in the structure thereof.

As such an organic resin, one or two or more types of organic resins (unmodified organic resins) may be mixed and used, or one or two or more types of organic resins obtained by modifying, in the presence of at least one type of organic resin, at least one type of another organic resin may be mixed and used. The organic resin film may contain any coloring pigment or antirust pigment. Also, water-based organic resins that are dissolved or dispersed in water can be used.

### Examples

Next, Examples of the present invention will be described, but conditions in Examples are examples of conditions adopted to confirm feasibility and an effect of the present invention, and the present invention is not limited to these examples of conditions. The present invention may adopt various conditions as long as an object of the present invention is achieved without departing from the gist of the present invention.

Details of Examples are shown in Tables 1A to D, Tables 2A to D, and Tables 3A to D.

First, a cold-rolled steel sheet (0.1%C-0.3%Si-1.0%Mn) having a sheet thickness of 1.6 mm was prepared as a base steel sheet (base steel material) to be subjected to plating. This base steel material was cut into a size of 200 mm × 200 mm (× sheet thickness), and then hot-dip plating was continuously performed using a batch type hot-dip plating tester.

In a case where a Ni-containing metal layer (metal layer) is formed between the base steel sheet and the Zn-Al-Mg-based alloy layer (described as "type: 2 layers" in the table), the Ni-containing metal layer was manufactured by electro plating as described below.

In the table, "metal component α" represents components other than Ni contained in the Ni-containing metal layer. "α (%)" in the table indicates the amount of the metal component α contained in the Ni-containing metal layer.

### Ni-Cr plating:

CrCl₃·6H₂O = 0.5 to 1 mol/L,
NiCl₂·6H₂O = 0.2 to 1 mol/L,
NaCl = 0.1 to 0.5 mol/L, and
H₃BO₃ = 0.1 to 0.3 mol/L
were dissolved in a DMF solution and left for 24 hours. The pH was adjusted to 1.0 to 4.0 with HCl. A Ni-Cr plating layer was manufactured on the base steel sheet at a bath temperature of 25°C, a flow rate of 0 to 5 m/min, and a current density Dk = 2.5 to 25 A/dm². The plating adhesion amount as shown in Table 1 was adjusted by adjusting the energization time.

### Ni-W plating:

NiSO₄·6H₂O = 0.1 to 0.5 mol/L,
Na₂WO₄·6H₂O = 0.1 to 0.5 mol/L, and
Citric acid 0.32 mol/L
were dissolved in ion-exchanged water and allowed to stand for 24 hours. The pH was adjusted to 6.0 with NaOH. A Ni-W plating layer was manufactured on the base steel sheet at a bath temperature of 70°C, a current density Dk = 2.5 to 15A/dm², and a flow rate of 0 to 5 m/min. The plating adhesion amount as shown in Table 1 was adjusted by adjusting the energization time.

### Ni-Co plating:

NiSO₄·6H₂O = 0 to 2 mol/L,
NiCl₂ = 0 to 1 mol/L,
CoSO₄·7H₂O = 0 to 2 mol/L,
CoCl₂ = 0 to 1 mol/L,
H₃BO₃ = 1 mol/L, and
NaCl = 0 to 0.5 mol/L
were dissolved in ion-exchanged water and allowed to stand for 24 hours. The pH was adjusted to 4.0 with HCl. A Ni-Co plating layer was manufactured on the base steel sheet at a bath temperature of 60°C, a flow rate of 0 to 5 m/min, and a current density Dk of 2.5 to 25 A/dm². The plating adhesion amount as shown in Table 1 was adjusted by adjusting the energization time.

### Ni-Mo plating:

NiSO₄·6H₂O = 0.1 to 0.5 mol/L,
Na₂MoO₄·2H₂O = 0.1 to 0.5 mol/L,
Sodium gluconate =0 to 0.5 mol/L, and
Citric acid = 0 to 0.5 mol/L
were dissolved in ion-exchanged water and allowed to stand for 24 hours. The pH was adjusted to 8.0 to 11.0 with NaOH. A Ni-Mo plating layer was manufactured on the base steel sheet at a bath temperature of 45°C, a current density Dk = 2.5 to 15A/dm², and a flow rate of 0 to 5 m/min. The plating adhesion amount as shown in Table 1 was adjusted by adjusting the energization time.

As a plating bath, pure metals of Zn, Al, and Mg (purity: 3N or higher) are mixed to prepare a Zn-Al-Mg-based hot-dip plating bath. The plating bath temperature is 520°C when Al is less than 20%, and 600°C when Al is 20% or more.

Respective pure metals (3N or higher) are added to this plating bath to prepare a plating bath (15 L) having a desired composition. Sufficient bubbling (1 L/min) with nitrogen is continued from the dissolution of the plating and during the test, and sufficient stirring is performed so as not to generate settled dross.

### <Manufacturing Conditions of Zn-Al-Mg-Based Alloy Layer>

The Zn-Al-Mg-based alloy layer was manufactured by adopting any one of the following manufacturing methods A to D. The temperature history during manufacturing is managed with a sample prepared by welding a K thermocouple to one center point of the coated steel sheet. Specifically, first, the coated steel sheet provided with the K thermocouple is energized to generate Joule heat, thereby heating the coated steel sheet. Then, based on the energization amount at this time and the thermal history acquired by the K thermocouple, the deviation from the target temperature is corrected by adjusting the energization amount.

In this way, the temperature history during the manufacturing of the Zn-Al-Mg-based alloy layer is managed.

### Manufacturing Method A:

The manufacturing method A is a method of forming a Zn-Al-Mg-based alloy layer on a base steel sheet without forming a metal layer on the base steel sheet.

A sufficiently pickled cold-rolled steel sheet of 150 × 300 × 1.6 mm is used as the base steel sheet. In a N₂ and H₂ (5%) reducing atmosphere, the temperature is raised at a dew point of -60°C at 10°C/sec, and then held at 800°C for 1 minute. Thereafter, the temperature is lowered to the plating bath temperature by spraying N₂ gas, and the base steel sheet is charged into the plating bath. After immersion in the plating bath for 3 seconds, the base steel sheet is pulled up, and N₂ gas wiping is performed to adjust the coated layer thickness. Thereafter, N₂ gas spray cooling was performed, and cooling was performed so that the average cooling rate from the plating bath temperature to 100°C was 10 to 15°C/sec.

### Manufacturing Method B:

A plated steel sheet including a metal layer formed by the electro plating is used as the base steel sheet. In a N₂ and H₂ (5%) reducing atmosphere, the temperature is raised at a dew point of 0°C at 10°C/sec, and then held at 800°C for 3 minutes. Thereafter, the temperature is lowered to the plating bath temperature by spraying N₂ gas, and the base steel sheet is charged into the plating bath. After immersion in the plating bath for 3 seconds, the base steel sheet is pulled up, and N₂ gas wiping is performed to adjust the coated layer thickness. Thereafter, N₂ gas spray cooling was performed, and cooling was performed so that the average cooling rate from the plating bath temperature to 100°C was 10 to 15°C/sec.

### Manufacturing Method C:

A plated steel sheet including a metal layer formed by the electro plating is used as the base steel sheet. In a N₂ and H₂ (5%) reducing atmosphere, the temperature is raised to 700°C at a dew point of 0°C at 10°C/sec, then the temperature is lowered to the plating bath temperature by spraying N₂ gas, and the base steel sheet is charged into the plating bath. After immersion in the plating bath for 3 seconds, the base steel sheet is pulled up, and N₂ gas wiping is performed to adjust the coated layer thickness. Thereafter, N₂ gas spray cooling was performed, and cooling was performed so that the average cooling rate from the plating bath temperature to 100°C was 10 to 15°C/sec.

### Manufacturing Method D:

A plated steel sheet including a metal layer formed by the electro plating is used as the base steel sheet. In a N₂ and H₂ (5%) reducing atmosphere, the temperature is raised to 800°C at a dew point of -60°C at 10°C/sec, and then held at 800°C for 3 minutes. Thereafter, the temperature is lowered to the plating bath temperature by spraying N₂ gas, and the base steel sheet is charged into the plating bath. After immersion in the plating bath for 3 seconds, the base steel sheet is pulled up, and N₂ gas wiping is performed to adjust the coated layer thickness. Thereafter, N₂ gas spray cooling was performed, and cooling was performed so that the average cooling rate from the plating bath temperature to 100°C was 10 to 15°C/sec.

Various samples were collected from the obtained coated steel sheet, and subjected to GDS to confirm the structure of the coated layer. As the performance evaluation, an examination of plating properties (presence or absence of bare spots), an examination of plating adhesion (1T bending), and an evaluation of corrosion resistance (corrosion rate) were performed. In the table, "C/C + C" is "C_{αmax}/(C_{Nimax} + C_{αmax})", "D - D_{Ni}" is "D_{αmax} - D_{Nimax}", "D₅₀ - D₁" is "(D_{dif50%}) - (D_{dif1%})", and "D₉₅ - D₅₀" is "(D_{dif95%}) - (D_{dif50%})". In addition, Nos. 57 to 59 are examples in which two or more kinds metal components are used in the metal layer, and "C_{αmax}" of No. 57 is the maximum value of the concentration of Cr, "C_{αmax}" of No. 58 is the maximum value of the concentration of Cr, and "C_{αmax}" of No. 59 is the maximum value of the concentration of Cr.

**[Table 1A]**

| No | Coated layer type | Ni-containing metal layer | | | Manufacturing method |
|---|---|---|---|---|---|
| | | Metal component α | α (%) | Ni-α adhesion amount (g/m²) | |
| 1 | 2 layer | Cr | 20 | 2 | B |
| 2 | 2 layer | Cr | 49 | 0.3 | B |
| 3 | 2 layer | Cr | 10 | 3 | B |
| 4 | 2 layer | Cr | 15 | 3 | C |
| 5 | 2 layer | Cr | 30 | 2 | B |
| 6 | 2 layer | Cr | 55 | 1 | B |
| 7 | 2 layer | Cr | 8 | 7 | B |
| 8 | 2 layer | Cr | 5 | 6 | B |
| 9 | 2 layer | Cr | 15 | 4 | C |
| 10 | 2 layer | Cr | 25 | 2 | B |
| 11 | 2 layer | Cr | 35 | 1 | B |
| 12 | 2 layer | Cr | 12 | 2 | B |
| 13 | 2 layer | Cr | 12 | 2 | C |
| 14 | 2 layer | Cr | 12 | 2 | D |
| 15 | 2 layer | Cr | 3 | 6 | B |
| 16 | 2 layer | Cr | 18 | 3 | C |
| 17 | 2 layer | Cr | 28 | 2 | B |
| 18 | 2 layer | Mo | 10 | 3 | B |
| 19 | 2 layer | Mo | 17 | 2 | B |
| 20 | 2 layer | Mo | 25 | 3 | C |
| 21 | 2 layer | Mn | 15 | 1 | B |
| 22 | 2 layer | Mn | 15 | 1 | C |
| 23 | 2 layer | Mn | 15 | 1 | D |
| 24 | 2 layer | Co | 15 | 2 | B |
| 25 | 2 layer | Co | 15 | 2 | C |
| 26 | 2 layer | Co | 15 | 2 | D |
| 27 | 2 layer | Cr | 10 | 3 | B |
| 28 | 2 layer | Cr | 20 | 3 | B |
| 29 | 2 layer | Cr | 30 | 2 | B |
| 30 | 2 layer | Cr | 15 | 3 | B |
| 31 | 2 layer | W | 20 | 2 | B |

**[Table 1B]**

| No | Coated layer type | Ni-containing metal layer | | | Manufacturing method |
|---|---|---|---|---|---|
| | | Metal component α | α (%) | Ni-α adhesion amount (g/m²) | |
| 32 | 2 layer | W | 30 | 2 | B |
| 33 | 2 layer | W | 15 | 2 | B |
| 34 | 2 layer | W | 15 | 2 | C |
| 35 | 2 layer | W | 15 | 2 | D |
| 36 | 2 layer | Co | 25 | 3 | B |
| 37 | 2 layer | Co | 45 | 0.5 | C |
| 38 | 2 layer | Mn | 3 | 0.3 | B |
| 39 | 2 layer | Mn | 4 | 5 | B |
| 40 | 2 layer | Mn | 8 | 4 | B |
| 41 | 2 layer | Mn | 12 | 4 | B |
| 42 | 2 layer | Co | 10 | 4 | B |
| 43 | 2 layer | Co | 20 | 3 | C |
| 44 | 2 layer | Cr | 35 | 2 | B |
| 45 | 2 layer | Cr | 20 | 2 | B |
| 46 | 2 layer | Cr | 15 | 3 | B |
| 47 | 2 layer | Cr | 10 | 3 | B |
| 48 | 2 layer | Mo | 9 | 2 | B |
| 49 | 2 layer | Mo | 9 | 2 | C |
| 50 | 2 layer | Mo | 9 | 2 | D |
| 51 | 2 layer | Cr | 15 | 3 | C |
| 52 | 2 layer | Cr | 45 | 5 | B |
| 53 | 2 layer | Cr | 45 | 3 | B |
| 54 | Multilayer | Cr → Ni | - | 1 → 2 | B |
| 55 | Multilayer | Mn → Ni | - | 1 → 2 | B |
| 56 | Multilayer | Co → Ni | - | 1 → 2 | B |
| 57 | 2 layer | Cr, W | 20 | 2 | B |
| 58 | 2 layer | Cr, Mo | 20 | 2 | B |
| 59 | 2 layer | Cr, Co | 20 | 2 | B |
| 60 | 2 layer | Cr | 20 | 0.3 | B |
| 61 | 2 layer | Cr | 20 | 2 | B |
| 62 | 2 layer | Cr | 4 | 2 | B |

**[Table 1C]**

| No | Coated layer type | Manufacturing method |
|---|---|---|
| 63 | 1 layer | A |
| 64 | 1 layer | A |
| 65 | 1 layer | A |
| 66 | 1 layer | A |
| 67 | 1 layer | A |
| 68 | 1 layer | A |
| 69 | 1 layer | A |
| 70 | 1 layer | A |
| 71 | 1 layer | A |
| 72 | 1 layer | A |
| 73 | 1 layer | A |
| 74 | 1 layer | A |
| 75 | 1 layer | A |
| 76 | 1 layer | A |
| 77 | 1 layer | A |
| 78 | 1 layer | A |
| 79 | 1 layer | A |
| 80 | 1 layer | A |
| 81 | 1 layer | A |
| 82 | 1 layer | A |
| 83 | 1 layer | A |
| 84 | 1 layer | A |
| 85 | 1 layer | A |
| 86 | 1 layer | A |
| 87 | 1 layer | A |
| 88 | 1 layer | A |
| 89 | 1 layer | A |
| 90 | 1 layer | A |

**[Table 1D]**

| No | Coated layer type | Manufacturing method |
|---|---|---|
| 91 | 1 layer | A |
| 92 | 1 layer | A |
| 93 | 1 layer | A |
| 94 | 1 layer | A |
| 95 | 1 layer | A |
| 96 | 1 layer | A |
| 97 | 1 layer | A |
| 98 | 1 layer | A |
| 99 | 1 layer | A |
| 100 | 1 layer | A |
| 101 | 1 layer | A |
| 102 | 1 layer | A |
| 103 | 1 layer | A |
| 104 | 1 layer | A |
| 105 | 1 layer | A |
| 106 | 1 layer | A |
| 107 | 1 layer | A |
| 108 | 1 layer | A |
| 109 | 1 layer | A |
| 110 | 1 layer | A |
| 111 | 1 layer | A |
| 112 | 1 layer | A |
| 113 | 1 layer | A |
| 114 | 1 layer | A |
| 115 | 1 layer | A |
| 116 | 1 layer | A |
| 117 | 1 layer | A |
| 118 | 1 layer | A |

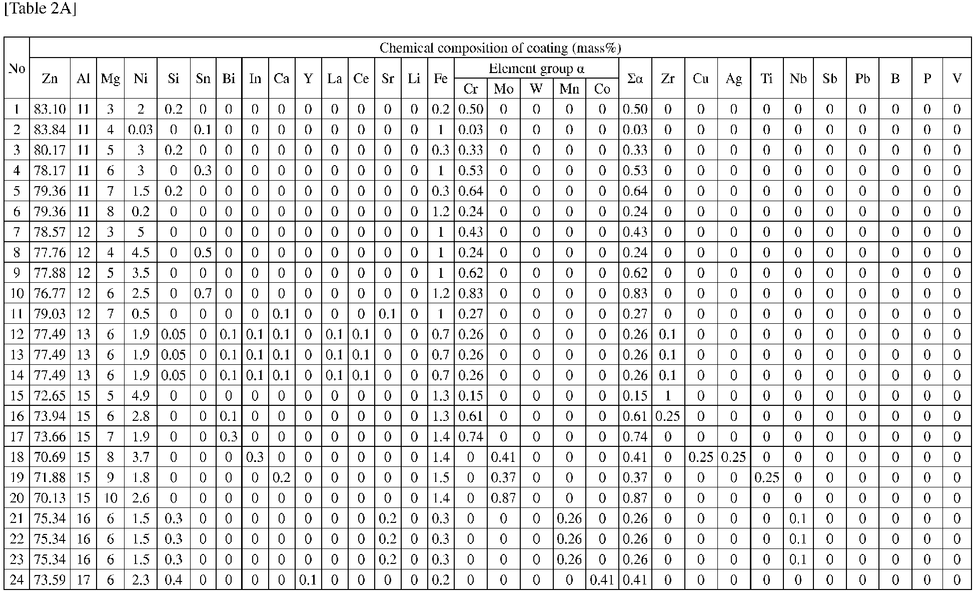

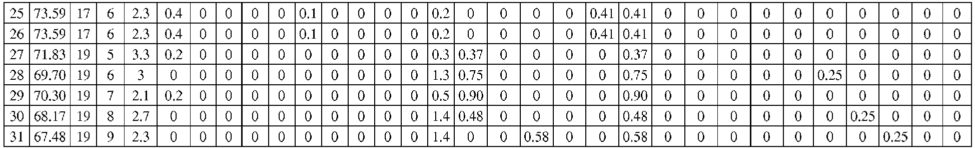

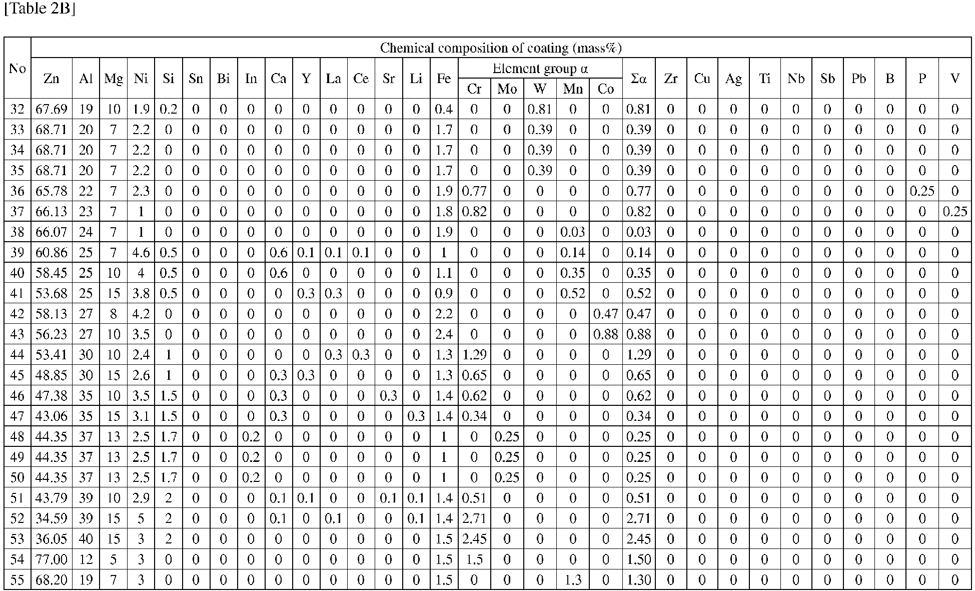

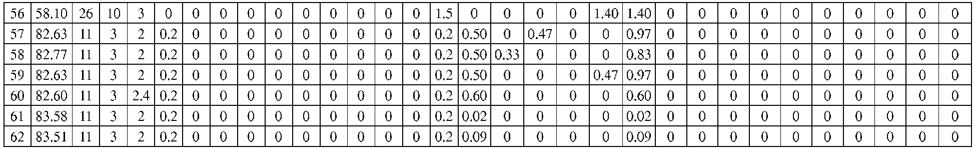

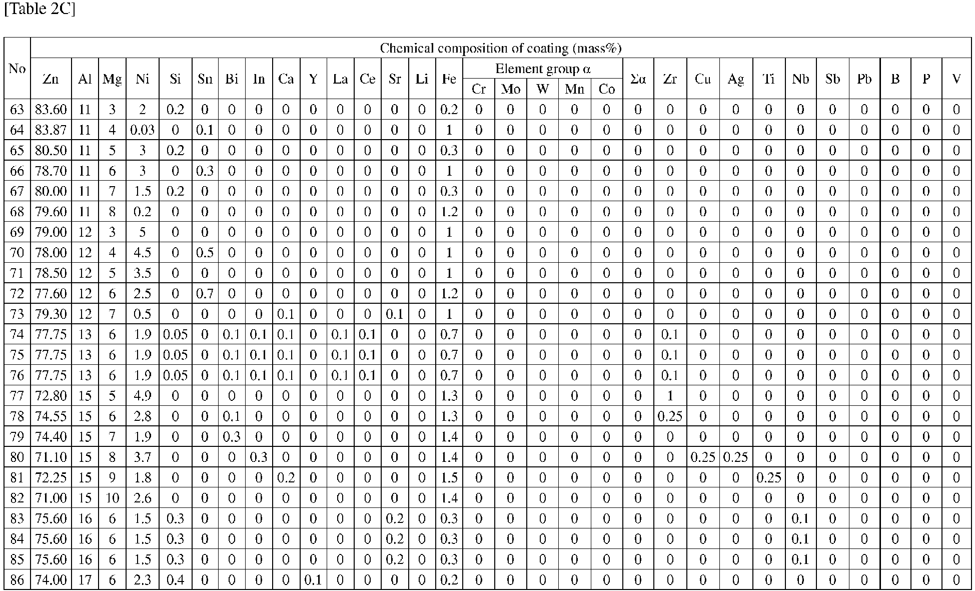

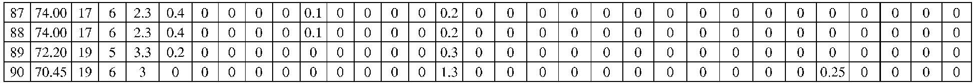

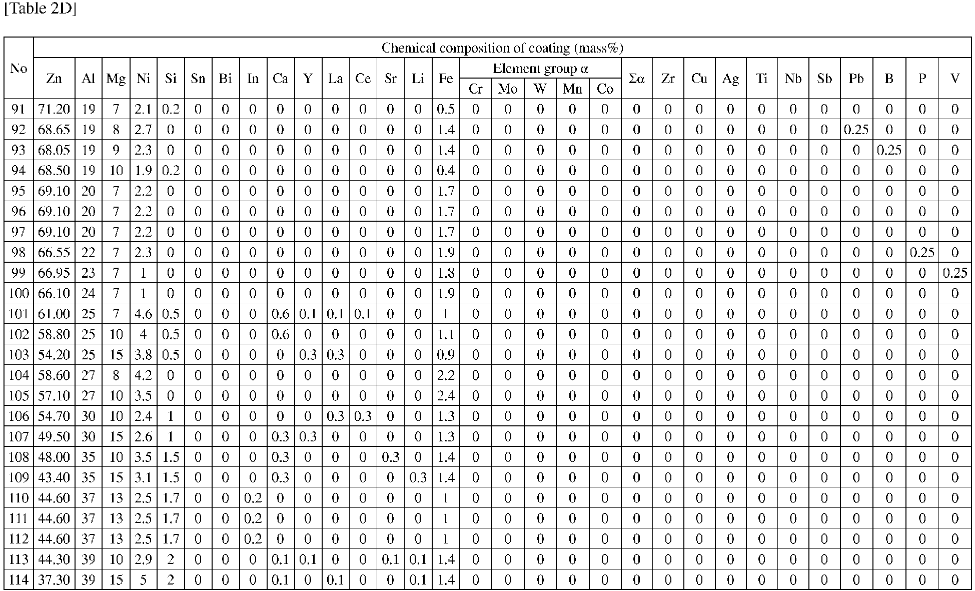

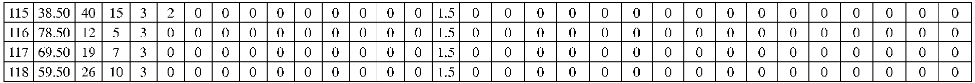

**[Table 3A]**

| No | Bare spots | Coating thickness | GDS | | | | | | | | | | | Corrosion resistance | | Classification |
|---|---|---|---|---|---|---|---|---|---|---|---|---|---|---|---|---|
| | | | D_{dif1%} | D_{dif50%} | D_{dif95%} | C_{Nimax} | D_{Nimax} | C_{αmax} | D_{αmax} | C/C + C | D - D_{Ni} | D₅₀ - D₁ | D₉₅ - D₅₀ | Coating adhesion (1T bending) | Corrosion rate | |
| | | (µm) | (µm) | (µm) | (µm) | (%) | (µm) | (%) | (µm) | (-) | (µm) | (µm) | (µm) | | | |
| 1 | OK | 25 | 25 | 33.31 | 38.43 | 7.7 | 30.0602 | 3.8 | 30.0607 | 0.33 | 0.0005 | 5.12 | 8.31 | A | A | Example |
| 2 | OK | 25 | 25 | 34.03 | 35.04 | 9.5 | 28.8206 | 1.3 | 28.8211 | 0.12 | 0.0005 | 1.01 | 9.03 | D | B | Example |
| 3 | OK | 25 | 25 | 33.72 | 39.14 | 8.4 | 31.6572 | 2.8 | 31.6582 | 0.25 | 0.0010 | 5.42 | 8.72 | B | A | Example |
| 4 | OK | 25 | 25 | 40.52 | 42.03 | 10.0 | 38.5145 | 4.3 | 38.5146 | 0.30 | 0.0001 | 1.51 | 15.52 | A | C | Example |
| 5 | OK | 25 | 25 | 35.18 | 40.29 | 9.8 | 29.5254 | 6.0 | 29.5255 | 0.38 | 0.0001 | 5.11 | 10.18 | A | A | Example |
| 6 | NG | 25 | 25 | 34.11 | 38.42 | 4.9 | 27.6456 | 5.1 | 27.6457 | 0.51 | 0.0001 | 4.31 | 9.11 | E | E | Comparative Example |
| 7 | OK | 25 | 25 | 43.82 | 51.53 | 22.2 | 43.2554 | 5.2 | 43.2557 | 0.19 | 0.0003 | 7.71 | 18.82 | B | B | Example |
| 8 | OK | 25 | 25 | 40.32 | 46.86 | 14.2 | 40.0732 | 2.7 | 40.0733 | 0.16 | 0.0001 | 6.54 | 15.32 | D | B | Example |
| 9 | OK | 25 | 25 | 41.82 | 44.24 | 14.9 | 41.5278 | 5.5 | 41.5279 | 0.27 | 0.0001 | 2.42 | 16.82 | S | C | Example |
| 10 | OK | 25 | 25 | 34.72 | 39.93 | 11.2 | 30.9414 | 4.8 | 30.9415 | 0.30 | 0.0001 | 5.21 | 9.72 | A | A | Example |
| 11 | OK | 25 | 25 | 33.56 | 36.17 | 4.7 | 27.8130 | 3.3 | 27.8130 | 0.41 | 0.0000 | 2.61 | 8.56 | B | B | Example |
| 12 | OK | 25 | 25 | 34.16 | 39.48 | 7.0 | 29.4134 | 2.1 | 29.4135 | 0.23 | 0.0001 | 5.32 | 9.16 | C | A | Example |
| 13 | OK | 25 | 25 | 37.65 | 39.66 | 7.9 | 36.3246 | 2.1 | 36.3247 | 0.21 | 0.0001 | 2.01 | 12.65 | C | C | Example |
| 14 | OK | 25 | 25 | 34.12 | 38.38 | 7.8 | 30.0543 | 2.2 | 30.0608 | 0.22 | 0.0065 | 4.26 | 9.12 | D' | D | Example |
| 15 | OK | 25 | 25 | 40.22 | 46.73 | 28.5 | 38.9243 | 1.5 | 38.9244 | 0.05 | 0.0001 | 6.51 | 15.22 | D | B | Example |
| 16 | OK | 25 | 25 | 40.60 | 42.13 | 13.8 | 39.5547 | 5.1 | 39.5548 | 0.27 | 0.0001 | 1.53 | 15.60 | S | C | Example |
| 17 | OK | 25 | 25 | 34.12 | 39.33 | 11.8 | 29.8581 | 5.3 | 29.8582 | 0.31 | 0.0001 | 5.21 | 9.12 | S | A | Example |
| 18 | OK | 25 | 25 | 36.23 | 41.75 | 10.2 | 32.9252 | 2.7 | 32.9252 | 0.21 | 0.0000 | 5.52 | 11.23 | C | A | Example |
| 19 | OK | 25 | 25 | 33.16 | 38.29 | 16.3 | 29.9647 | 3.1 | 29.9648 | 0.16 | 0.0001 | 5.13 | 8.16 | D | A | Example |
| 20 | OK | 25 | 25 | 40.36 | 42.18 | 15.5 | 39.7542 | 7.3 | 39.7543 | 0.32 | 0.0001 | 1.82 | 15.36 | A | C | Example |
| 21 | OK | 25 | 25 | 32.81 | 34.63 | 3.9 | 27.8541 | 1.1 | 27.8542 | 0.22 | 0.0001 | 1.82 | 7.81 | C | B | Example |
| 22 | OK | 25 | 25 | 35.22 | 36.00 | 4.3 | 34.8487 | 1.2 | 34.8488 | 0.22 | 0.0001 | 0.78 | 10.22 | C | C | Example |
| 23 | OK | 25 | 25 | 33.54 | 37.36 | 4.6 | 27.6541 | 1.3 | 27.6619 | 0.22 | 0.0078 | 3.82 | 8.54 | D' | D | Example |
| 24 | OK | 25 | 25 | 34.36 | 39.58 | 9.0 | 29.9940 | 2.7 | 29.9941 | 0.23 | 0.0001 | 5.22 | 9.36 | C | A | Example |
| 25 | OK | 25 | 25 | 36.20 | 37.42 | 9.4 | 35.5126 | 2.8 | 35.5127 | 0.23 | 0.0001 | 1.22 | 11.20 | C | C | Example |
| 26 | OK | 25 | 25 | 33.16 | 38.28 | 10.6 | 30.4164 | 3.0 | 30.4214 | 0.22 | 0.0050 | 5.12 | 8.16 | D' | D | Example |
| 27 | OK | 20 | 20 | 30.08 | 35.50 | 11.2 | 28.1543 | 2.8 | 28.1544 | 0.20 | 0.0001 | 5.42 | 10.08 | C | A | Example |
| 28 | OK | 20 | 20 | 28.87 | 34.29 | 16.8 | 28.2213 | 5.6 | 28.2213 | 0.25 | 0.0000 | 5.42 | 8.87 | S | A | Example |
| 29 | OK | 20 | 20 | 24.15 | 29.37 | 11.8 | 25.1543 | 5.8 | 25.1544 | 0.33 | 0.0001 | 5.22 | 4.15 | S | A | Example |
| 30 | OK | 20 | 20 | 28.62 | 34.14 | 13.4 | 27.4634 | 4.0 | 27.4634 | 0.23 | 0.0000 | 5.52 | 8.62 | B | A | Example |
| 31 | OK | 20 | 20 | 28.27 | 33.39 | 12.6 | 24.8362 | 4.2 | 24.8363 | 0.25 | 0.0001 | 5.12 | 8.27 | A | A | Example |

**[Table 3B]**

| No | Bare spots | Coating thickness | GDS | | | | | | | | | | | Corrosion resistance | | Classification |
|---|---|---|---|---|---|---|---|---|---|---|---|---|---|---|---|---|
| | | | D_{dif1%} | D_{dif50%} | D_{dif95%} | C_{Nimax} | D_{Nimax} | C_{αmax} | D_{αmax} | C/C + C | D - D_{Ni} | D₅₀ - D₁ | D₉₅ - D₅₀ | Coating adhesion (1T bending) | Corrosion rate | |
| | | (µm) | (µm) | (µm) | (µm) | (%) | (µm) | (%) | (µm) | (-) | (µm) | (µm) | (µm) | | | |
| 32 | OK | 20 | 20 | 28.65 | 33.77 | 11.6 | 25.3214 | 5.7 | 25.3215 | 0.33 | 0.0001 | 5.12 | 8.65 | S | A | Example |
| 33 | OK | 20 | 20 | 27.98 | 33.10 | 9.4 | 25.1060 | 2.8 | 25.1061 | 0.23 | 0.0001 | 5.12 | 7.98 | C | A | Example |
| 34 | OK | 20 | 20 | 30.90 | 32.12 | 10.3 | 30.1475 | 2.9 | 30.1476 | 0.22 | 0.0001 | 1.22 | 10.90 | C | C | Example |
| 35 | OK | 20 | 20 | 29.27 | 34.39 | 9.6 | 25.1543 | 2.7 | 25.2527 | 0.22 | 0.0984 | 5.12 | 9.27 | D' | D | Example |
| 36 | OK | 25 | 25 | 33.25 | 38.68 | 14.2 | 32.6547 | 7.3 | 32.6548 | 0.34 | 0.0001 | 5.43 | 8.25 | B | A | Example |
| 37 | OK | 25 | 25 | 35.30 | 35.58 | 11.2 | 34.5543 | 2.3 | 34.5544 | 0.17 | 0.0001 | 0.28 | 10.30 | D | C | Example |
| 38 | OK | 25 | 25 | 35.10 | 35.75 | 3.8 | 34.3542 | 0.3 | 34.3544 | 0.07 | 0.0002 | 0.65 | 10.10 | D | B | Example |
| 39 | OK | 25 | 25 | 38.80 | 44.85 | 11.9 | 37.9547 | 2.1 | 37.9547 | 0.15 | 0.0000 | 6.05 | 13.80 | D | B | Example |
| 40 | OK | 25 | 25 | 34.45 | 40.49 | 15.1 | 33.5546 | 3.1 | 33.5546 | 0.17 | 0.0000 | 6.04 | 9.45 | D | A | Example |
| 41 | OK | 25 | 25 | 34.50 | 40.40 | 14.3 | 33.8541 | 4.5 | 33.8561 | 0.24 | 0.0020 | 5.90 | 9.50 | B | A | Example |
| 42 | OK | 25 | 25 | 34.72 | 40.54 | 12.4 | 33.7541 | 3.7 | 33.7541 | 0.23 | 0.0000 | 5.82 | 9.72 | B | A | Example |
| 43 | OK | 25 | 25 | 40.30 | 42.12 | 14.7 | 39.2541 | 5.7 | 39.2541 | 0.28 | 0.0000 | 1.82 | 15.30 | B | C | Example |
| 44 | OK | 25 | 25 | 33.36 | 39.07 | 12.4 | 30.1515 | 6.7 | 30.1515 | 0.35 | 0.0000 | 5.71 | 8.36 | B | A | Example |
| 45 | OK | 25 | 25 | 35.21 | 40.33 | 13.9 | 29.8214 | 3.7 | 29.8215 | 0.21 | 0.0001 | 5.12 | 10.21 | B | A | Example |
| 46 | OK | 25 | 25 | 33.71 | 39.22 | 13.0 | 33.2140 | 4.1 | 33.2140 | 0.24 | 0.0000 | 5.51 | 8.71 | B | A | Example |
| 47 | OK | 25 | 25 | 33.32 | 38.75 | 10.8 | 32.5542 | 2.7 | 32.5542 | 0.20 | 0.0000 | 5.43 | 8.32 | B | A | Example |
| 48 | OK | 25 | 25 | 34.26 | 39.28 | 7.3 | 30.1784 | 1.5 | 30.1804 | 0.17 | 0.0020 | 5.02 | 9.26 | D | A | Example |
| 49 | OK | 25 | 25 | 36.06 | 37.35 | 6.8 | 35.7524 | 1.5 | 35.7530 | 0.18 | 0.0006 | 1.29 | 11.06 | D | C | Example |
| 50 | OK | 25 | 25 | 32.98 | 37.17 | 7.8 | 29.9245 | 1.6 | 30.0117 | 0.17 | 0.0872 | 4.19 | 7.98 | D' | D' | Example |
| 51 | OK | 25 | 25 | 40.36 | 42.23 | 15.2 | 39.6245 | 4.3 | 39.6245 | 0.22 | 0.0000 | 1.87 | 15.36 | B | C | Example |
| 52 | OK | 25 | 25 | 35.65 | 41.86 | 22.9 | 34.8245 | 22.0 | 34.8245 | 0.49 | 0.0000 | 6.21 | 10.65 | B | B | Example |
| 53 | NG | 25 | 25 | 33.66 | 39.07 | 16.3 | 33.7442 | 13.3 | 33.7442 | 0.45 | 0.0000 | 5.41 | 8.66 | E | E | Comparative Example |
| 54 | OK | 25 | 25 | 35.55 | 37.86 | 12.5 | 30.1324 | 6.7 | 30.2559 | 0.35 | 0.1235 | 2.31 | 10.55 | E | C | Comparative Example |
| 55 | OK | 25 | 25 | 35.55 | 37.92 | 12.5 | 30.1364 | 6.7 | 30.2389 | 0.35 | 0.1025 | 2.37 | 10.55 | E | C | Comparative Example |
| 56 | OK | 25 | 25 | 35.52 | 37.83 | 12.5 | 30.1586 | 6.7 | 30.2621 | 0.35 | 0.1035 | 2.31 | 10.52 | E | C | Comparative Example |
| 57 | OK | 25 | 25 | 33.76 | 39.00 | 7.9 | 30.0602 | 4.0 | 30.0607 | 0.34 | 0.0005 | 5.24 | 8.76 | A | A | Example |
| 58 | OK | 25 | 25 | 33.01 | 38.54 | 8.2 | 30.0602 | 3.9 | 30.0607 | 0.32 | 0.0005 | 5.53 | 8.01 | A | A | Example |
| 59 | OK | 25 | 25 | 33.92 | 39.24 | 7.5 | 30.0602 | 4.1 | 30.0607 | 0.35 | 0.0005 | 5.32 | 8.92 | A | A | Example |
| 60 | OK | 25 | 25 | 33.46 | 38.60 | 7.7 | 30.0602 | 0.2 | 30.0607 | 0.03 | 0.0005 | 5.14 | 8.46 | A | E | Comparative Example |
| 61 | OK | 25 | 25 | 33.34 | 38.51 | 7.5 | 30.0602 | 3.7 | 30.0607 | 0.33 | 0.0005 | 5.17 | 8.34 | A | E | Comparative Example |
| 62 | OK | 25 | 25 | 33.53 | 39.10 | 4.9 | 30.0602 | 0.2 | 30.0607 | 0.04 | 0.0005 | 5.57 | 8.53 | A | E | Comparative Example |

**[Table 3C]**

| No | Bare spots | Coating thickness | Corrosion resistance | | Classification |
|---|---|---|---|---|---|
| | | | Coating adhesion (1T bending) | Corrosion rate | |
| | | (µm) | | | |
| 63 | OK | 25 | E | E | Comparative Example |
| 64 | OK | 25 | E | E | Comparative Example |
| 65 | OK | 25 | E | E | Comparative Example |
| 66 | OK | 25 | E | E | Comparative Example |
| 67 | OK | 25 | E | E | Comparative Example |
| 68 | OK | 25 | E | E | Comparative Example |
| 69 | OK | 25 | E | E | Comparative Example |
| 70 | OK | 25 | E | E | Comparative Example |
| 71 | OK | 25 | E | E | Comparative Example |
| 72 | OK | 25 | E | E | Comparative Example |
| 73 | OK | 25 | E | E | Comparative Example |
| 74 | OK | 25 | E | E | Comparative Example |
| 75 | OK | 25 | E | E | Comparative Example |
| 76 | OK | 25 | E | E | Comparative Example |
| 77 | OK | 25 | E | E | Comparative Example |
| 78 | OK | 25 | E | E | Comparative Example |
| 79 | OK | 25 | E | E | Comparative Example |
| 80 | OK | 25 | E | E | Comparative Example |
| 81 | OK | 25 | E | E | Comparative Example |
| 82 | OK | 25 | E | E | Comparative Example |
| 83 | OK | 25 | E | E | Comparative Example |
| 84 | OK | 25 | E | E | Comparative Example |
| 85 | OK | 25 | E | E | Comparative Example |
| 86 | OK | 25 | E | E | Comparative Example |
| 87 | OK | 25 | E | E | Comparative Example |
| 88 | OK | 25 | E | E | Comparative Example |
| 89 | OK | 20 | E | E | Comparative Example |
| 90 | OK | 20 | E | E | Comparative Example |

**[Table 3D]**

| No | Bare spots | Coating thickness | Corrosion resistance | | Classification |
|---|---|---|---|---|---|
| | | | Coating adhesion (1T bending) | Corrosion rate | |
| | | (µm) | | | |
| 91 | OK | 20 | E | E | Comparative Example |
| 92 | OK | 20 | E | E | Comparative Example |
| 93 | OK | 20 | E | E | Comparative Example |
| 94 | OK | 20 | E | E | Comparative Example |
| 95 | OK | 20 | E | E | Comparative Example |
| 96 | OK | 20 | E | E | Comparative Example |
| 97 | OK | 20 | E | E | Comparative Example |
| 98 | OK | 25 | E | E | Comparative Example |
| 99 | OK | 25 | E | E | Comparative Example |
| 100 | OK | 25 | E | E | Comparative Example |
| 101 | OK | 25 | E | E | Comparative Example |
| 102 | OK | 25 | E | E | Comparative Example |
| 103 | OK | 25 | E | E | Comparative Example |
| 104 | OK | 25 | E | E | Comparative Example |
| 105 | OK | 25 | E | E | Comparative Example |
| 106 | OK | 25 | E | E | Comparative Example |
| 107 | OK | 25 | E | E | Comparative Example |
| 108 | OK | 25 | E | E | Comparative Example |
| 109 | OK | 25 | E | E | Comparative Example |
| 110 | OK | 25 | E | E | Comparative Example |
| 111 | OK | 25 | E | E | Comparative Example |
| 112 | OK | 25 | E | E | Comparative Example |
| 113 | OK | 25 | E | E | Comparative Example |
| 114 | OK | 25 | E | E | Comparative Example |
| 115 | OK | 25 | E | E | Comparative Example |
| 116 | OK | 25 | E | E | Comparative Example |
| 117 | OK | 25 | E | E | Comparative Example |
| 118 | OK | 25 | E | E | Comparative Example |

### INDUSTRIAL APPLICABILITY

According to the above aspect of the present invention, it is possible to provide a hot-dip coated steel material that has excellent corrosion resistance in an exposed portion and can exhibit good corrosion resistance over a long period of time.

## Claims

1. A hot-dip coated steel material comprising:
a steel material; and
a coated layer disposed on a surface of the steel material,
the coated layer including; a Ni-containing metal layer provided on the steel material; and a Zn-Al-Mg-based alloy layer provided on the Ni-containing metal layer,
the coated layer having a chemical composition including, in terms of mass%,
Al: more than 10.0% and less than 40.0%,
Mg: 3.0% or more and 15.0% or less,
Ni: 0.03% or more and 5.0% or less,
Si: 0% or more and 2.0% or less,
Sn: 0% or more and 0.7% or less,
Bi: 0% or more and 0.3% or less,
In: 0% or more and 0.3% or less,
Ca: 0% or more and 0.6% or less,
Y: 0% or more and 0.3% or less,
La: 0% or more and 0.3% or less,
Ce: 0% or more and 0.3% or less,
Sr: 0% or more and 0.3% or less,
Li: 0% or more and 0.3% or less,
Fe: 0% or more and 5.0% or less,
Cr: 0% or more and 3.00% or less,
Mo: 0% or more and 3.00% or less,
W: 0% or more and 3.00% or less,
Mn: 0% or more and 3.00% or less,
Co: 0% or more and 3.00% or less,
Zr: 0% or more and 0.25% or less,
Cu: 0% or more and 0.25% or less,
Ag: 0% or more and 0.25% or less,
Ti: 0% or more and 0.25% or less,
Nb: 0% or more and 0.25% or less,
Sb: 0% or more and 0.25% or less,
Pb: 0% or more and 0.25% or less,
B: 0% or more and 1.5% or less,
P: 0% or more and 1.5% or less,
V: 0% or more and 0.25% or less, and
a remainder of Zn and impurities,
wherein
in the chemical composition, a total amount of one or more elements selected from an element group consisting of Cr, Mo, W, Mn and Co is 0.03% or more,
in an element distribution profile when quantitative analysis is performed by glow discharge optical emission spectrometry from a surface of the coated layer toward the steel material,
when a depth of a point at which an Fe concentration reaches 1% is defined as D_{dif1%} and a depth of a point at which an Fe concentration reaches 95% is defined as D_{dif95%},
a maximum value C_{Nimax} of a Ni concentration and a maximum value C_{αmax} of a concentration of a metal component α in D_{dif1%} to D_{dif95%} satisfy the following formulas (1) to (3),
when a depth of a point at which a Ni concentration reaches the C_{Nimax} is defined as D_{Nimax} and a depth of a point at which a concentration of the metal component α reaches the C_{αmax} is defined as D_{αmax}, the following formula (4) is satisfied, and
the metal component α is one or more selected from the element group: ${C}_{αmax} < {C}_{Nimax}$ $0.05 \leq {C}_{αmax} / \left({C}_{Nimax}+{C}_{αmax}\right) < 0.50$ $0.2 % < {C}_{αmax}$ $\left|{D}_{αmax}-{D}_{Nimax}\right| \leq 0.1 μm$

2. The hot-dip coated steel material according to claim 1, wherein the hot-dip coated steel material satisfies the following formulas (5) and (6): $3.5 % < {C}_{αmax}$ $0.2 \leq {C}_{αmax} / \left({C}_{Nimax}+{C}_{αmax}\right)$

3. The hot-dip coated steel material according to claim 1 or 2, wherein, in the element distribution profile, when a depth of a point at which an Fe concentration reaches 50% is defined as D_{if50%}, the following formulas (7) and (8) are satisfied: $7.50 \leq \left({D}_{dif 95 %}\right) - \left({D}_{dif 50 %}\right)$ $\left({D}_{dif 50 %}\right) - \left({D}_{dif 1 %}\right) \leq 10.00$
